# EUROPEAN PATENT SPECIFICATION

(11) **EP 4 376 534 B1**
(45) Date of publication and mention of the grant of the patent: **20.08.2025**
(21) Application number: 22306751.3
(22) Date of filing: 28.11.2022
(51) Int. Cl.: H04W 74/0836, H04L 1/08, H04L 5/00

(54) **ENHANCED RANDOM ACCESS PROCEDURE USING SHORT FORMAT**
ERWEITERTES DIREKTZUGRIFFSVERFAHREN UNTER VERWENDUNG VON KURZFORMAT
PROCÉDURE D'ACCÈS ALÉATOIRE AMÉLIORÉE UTILISANT UN FORMAT COURT

(43) Date of publication of application: 29.05.2024
(73) Proprietor: Eurecom, 06410 Biot (FR)
(72) Inventor: LE, Trung Kien, 06410 Biot (FR); WAGNER, Sebastian, 06410 Biot (FR); KNOPP, Raymond, 06410 Biot (FR)
(74) Representative: Atout PI Laplace

(56) References cited:
- QUALCOMM INCORPORATED: "Procedures Related to NOMA", vol. RAN WG1, no. Spokane, USA; 20181112 - 20181116, 11 November 2018 (2018-11-11), XP051555446, Retrieved from the Internet <URL:http://www.3gpp.org/ftp/Meetings%5F3GPP%5FSYNC/RAN1/Docs/R1%2D1813407%2Ezip> [retrieved on 20181111]
- INTERDIGITAL INC: "Discussion on channel structure for 2-step RACH", vol. RAN WG1, no. Prague, CZ; 20190826 - 20190830, 16 August 2019 (2019-08-16), XP051764844, Retrieved from the Internet <URL:http://www.3gpp.org/ftp/tsg_ran/WG1_RL1/TSGR1_98/Docs/R1-1908230.zip> [retrieved on 20190816]
- SIERRA WIRELESS: "Channel Structure for Two-Step RACH", vol. RAN WG1, no. Prague, CZ; 20190826 - 20190830, 16 August 2019 (2019-08-16), XP051765361, Retrieved from the Internet <URL:http://www.3gpp.org/ftp/tsg_ran/WG1_RL1/TSGR1_98/Docs/R1-1908753.zip> [retrieved on 20190816]

## Description

### TECHNICAL FIELD

The disclosure generally relates to digital communications and in particular to a user equipment and a method for enhanced transmission of random access signals.

### BACKGROUND

Many technical challenges have arisen to enable the transition of Mobile communication systems from the 4th generation (4G) mobile communication system to the future 5th generation (5G) mobile communication systems and beyond generations. In particular, 5G New Radio (5G NR) technology is being standardized to provide rich, reliable and hyper-connected communications.

A communications system forms a network comprising base stations providing radio coverage over a geographical area forming a cell. The cells serve User equipments (UE) through the base stations. A User equipment can communicate using base stations. A user equipment transmit data over an air or radio interface to the base stations in uplink (UL) transmissions and radio base stations transmit data over an air or radio interface to the user equipments in downlink (DL) transmissions.

Existing mobile communication systems use multiple-access technologies to support communication with multiple users by sharing available system resources.

Examples of such multiple-access technologies include orthogonal multiple access (OMA) techniques such as time division multiple access (TDMA), frequency division multiple access (FDMA) or code division multiple access (CDMA) together. OMA schemes provide orthogonal access to the users in time, frequency, code or space. However, none of these techniques can meet the high demands of future radio access systems.

Non-orthogonal multiple access (NOMA) technology has been proposed as a candidate radio access technology for the 5G networks.

NOMA differs from OMA schemes in that each user operates in the same band and at the same time where they are distinguished by their power levels. NOMA uses superposition coding at the transmitter such that the successive interference cancellation (SIC) receiver can separate the users both in the uplink and in the downlink channels.

Due to the advent of the Internet of Things with a larger number of connected devices, non-orthogonal Multiple Access (NOMA) has been studied for 3GPP Release-15 (3GPP TR 38.812: Study on Non-Orthogonal Multiple Access (NOMA) for NR V16.0.0," 2018-12). In NOMA, the receiver distinguishes signals from different User Equipments through multiple access (MA) signatures including interleaving, scrambler, spreading sequence, etc.

A key difference of NOMA schemes with respect to traditional random access (RA) is that coherent detection is assumed (channel estimation and detection). Also interference cancellation is considered.

On the contrary, the asynchronous transmission typically assumes timing offsets larger than the cyclic prefix length.

The channel structure consists of a preamble and data. NR-legacy preamble (PRACH preamble) is considered as a starting point.

MA (Multiple Access) signatures are not designed for T-F synchronization but for optimal user separation.

A Random Access (RACH) refers to a procedure where a User Equipment (UE) wants to create an initial connection with the network. In some networks, like LTE, the RACH procedure is performed in 4 steps (4 step RACH) using 4 signals transmitted between the UE and the base station.

A two-step RACH procedure (two step RACH WI) was approved for 3GPP Release 16 (ZTE, "RP-200085 Revised WID on 2-step RACH for NR," 2020) after the failure of specifying a design based on non-orthogonal multiple-access (NOMA). The two-step RACH procedure (two-step RACH) improves the overall latency of RACH procedure. Further examples of two-step RACH procedures can be found in Qualcomm R1-1813407 "Procedures Related to NOMA", InterDigital R1-1908230 "Discussion on channel structure for 2-step RACH" and Sierra Wirelss R1-1908753 "Channel structure for Two-Step RACH".

The two-step RACH procedure is performed in 2 steps using only two signals transmitted between the UE and the base station, including a message transmission (MsgA) from the User Equipment to the base station and a message reception at the User Equipment from the base station. The message MsgA transmitted from the User Equipment to the base station include a PRACH preamble transmission and a PUSCH transmission.

For the transmission of message MsgA, two preamble groups can be defined. Each preamble group is linked to a specific configuration of the PUSCH transmission of message MsgA (referred to hereinafter as 'MsgA-PUSCH configuration').

The MsgA-PUSCH configuration includes:
- PUSCH transmission parameters; and
- the time-frequency mapping of the PUSCH Occasions (PO).

However, the conventional two-step RACH WI procedure can have significant latency caused in the RRC connection (established for example for request, reestablishment, or handover) for time-sensitive applications, which increases of resource consumption.

There is accordingly a need for improvements in the RACH procedure.

### Summary of the disclosure

To address these and other problems, there is provided a method of performing a RACH procedure to provide a User Equipment UE access to a network in a communication system, the network comprising at least one base station, the RACH procedure comprising at least one step in which a RACH message is sent from the UE to the base station on one or more uplink channels. The message comprises an enhanced PUSCH transmission (PUSCH++) comprising a DMRS part and a PUSCH data part, the DMRS part being sent to serve as a preamble. The method comprises transmitting the DMRS part and the PUSCH data part together at the transmission time, the enhanced PUSCH having a short length format.

The embodiments of the disclosure therefore provide an enhanced 2-step PRACH capable of transmitting a message MsgA combining the information as preamble for the User Equipment identification, synchronization and PUSCH data in a new PUSCH format in a single transmission. The invention is defined by the appended claims. Any embodiment, example, aspect or implementation not claimed, is only presented as information.

### Brief description of the drawings

The accompanying drawings, which are incorporated in and constitute a part of this specification, illustrate various embodiments of the disclosure together with the general description of the disclosure given above, and the detailed description of the embodiments given below.
Figure 1 represents an exemplary communication system 100 in which embodiments of the present disclosure may be implemented.
Figure 2 depicts a User Equipment 1 implementing an enhanced RACH procedure according to the embodiments of the disclosure.
Figure 3 shows exemplary existing short length PRACH preamble formats that may be used as the format of the PUSCH++, according to the some embodiments of the disclosure.
Figure 4 illustrates the PUSCH++ transmission, according to an exemplary configuration.
Figure 5A depicts an exemplary PUSCH++ transmission with a cyclic prefix.
Figure 5B shows exemplary parameters of a short PUSCH++ format A1 with different subcarrier spacing.
Figure 6 depicts another exemplary short preamble format that can be used as the format of the PUSCH++.
Figure 7 represents exemplary PUSCH++ repetitions.
Figure 8 depicts repetitions in different slots.
Figure 9 represents exemplary PUSCH++ repetitions which have different PUSCH++ formats.
Figure 10 depicts an exemplary PUSCH++ transmission comprising 6 repetitions of PUSCH++ in which where Data and DMRS is only multiplexed in the first repetition and the next five repetitions only contain data.
Figure 11 depicts another exemplary PUSCH++ transmission comprising 6 repetitions of PUSCH++ in which the first repetition only contains DMRS and the next five repetitions only contain data.
Figure 12 depicts an exemplary PUSCH++ transmission comprising 6 repetitions of PUSCH++ in which the first and fifth repetitions only contain DMRS and the four repetitions remaining only contain data.
Figure 13 depicts an exemplary PUSCH++ transmission in which Frequency hopping is performed, among the repetitions.
Figure 14 represents specific PUSCH++ occasions assigned to each UE among a plurality of user equipment, in User equipment multiplexing.
Figure 15 represents an exemplary implementation where the PUSCH++ in the first occasion only contains DMRS, in User equipment multiplexing.
Figure 17 shows an example in which two UEs transmitting PUSCH++ in format A1 are multiplexed in a PUSCH++ occasion.

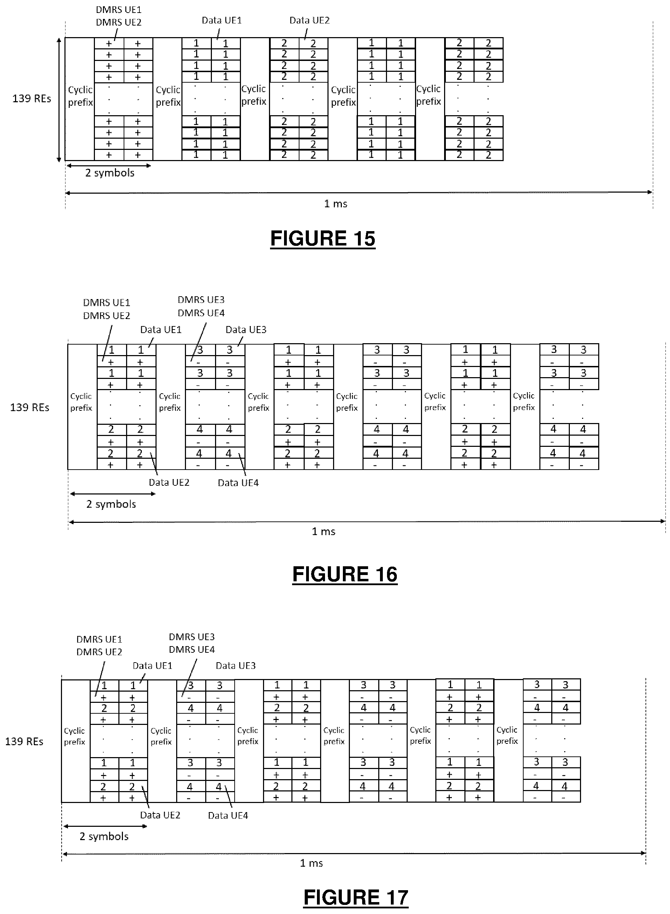

Figure 16 shows an example in which two UEs transmitting PUSCH++ are multiplexed in a PUSCH++ occasion in an interleaved FDM fashion.
Figure 17 is a flowchart representing a method of performing a RACH procedure, according to some embodiments.

### Detailed description

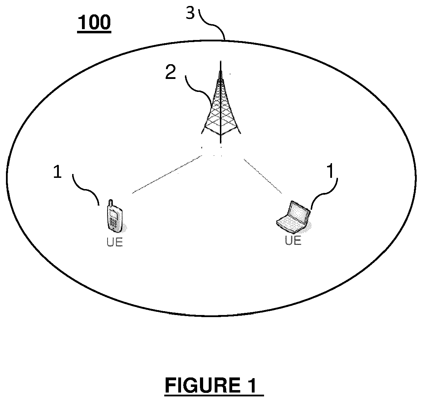

Referring to Figure 1, there is shown an exemplary communication system 100 in which embodiments of the present disclosure may be implemented.

The communication system 100 comprises a mobile communication network 3, one or more user terminals 1 (also referred to as User Equipments UEs, according to 3GPP standard), and one or more base stations 2 (also referred to as a Node, designated by a derivative of the term 'NodeB' such as gNodeB node or gNB in 5G NR). The User terminals 1 will be referred to hereinafter as User Equipments. The base station 2 is associated with a cell defining a geographical cell area. The cell associated with the base station 2 is served by the base stations. One or more user equipments may be included in the cell served by a base station 2.

The communication system 100 may be for example a wireless communication system such as a new radio (NR), a 5G and beyond 5G network.

Although reference will be mainly made to 3GPP network in the following description, the skilled person will readily understand that the embodiments of the disclosure also apply to similar or equivalent networks, such as a successor of the 3GPP network. In the following description, enclosed drawings and appended claims, the use of the term 3GPP and terms related to the 3GPP network should be interpreted accordingly. Similarly, although reference will be made to 5G NR, for illustration purpose, such reference should be interpreted as encompassing any future xG network (6G and beyond) having similar functional components.

A user equipment UE 1 is configured to transmit data to a base station 2 (such as a gNB node) on one or more uplink (UL) channels. The User Equipment 1 may receive data from the base station through one or more downlink channels (DL).

A user equipment 1 may be fixed or mobile and/or may be remotely monitored and/or controlled. A user equipment 1 may be equipped with power sources that provide power to the different components ensuring the UE operation. A User Equipment 1 may be, without limitation, a mobile phone, a computer, a laptop, a tablet, a drone, an loT device, etc.

The communication network 3 may be any wireless network enabling loT. Exemplary wireless networks comprise low-power short range networks and LPWANs.

Further, the communication network 3 may accommodate several pairs of user equipments 1. In such embodiments, multiple access techniques and/or network coding techniques may be used in combination with error correction codes and modulation. Exemplary multiple access techniques comprise without limitation Time Division Multiple Access (TDMA), Frequency Division Multiple Access (FDMA), Code Division Multiple Access (CDMA), and Space Division Multiple Access (SDMA), and Non-Orthogonal Multiple Access (NOMA) technology.

In some embodiments, data transmission between a UE 1 and a base station 2 in the communication system 100 may correspond to an uplink communication scenario during which the base station 2 receives data from the UE 1 through the uplink channels (the transmitter is the UE 1 and the receiver is the base station 2) or a downlink communication scenario during which the base station 2 transmit data to the UE 1 through the downlink channels (the transmitter is the base station 2 and the receiver is the UE 1).

The UEs 1 and/or the base stations 2 may be equipped with a plurality of transmit and/or receive antennas, and may implement space-time coding and/or space-time decoding techniques may be used in combination with coded modulations for encoding data both in the time and space dimensions.

A UE 1 may communicate with a base station 2 using a RRC mechanism (RCC is the acronym for Radio Resource Control).

Radio Resource Control (RRC) refers to a layer within the 5G NR protocol stack. The RRC mechanism exists only in the control plane, in a UE 1 and in the base station 2 (gNB).

A UE 1 and a base station 2 may communicate through the communication network 3, via the radio channel using the RRC control mechanism. RRC enables both parties (UE and base station) of a communication to exchange information. Further, the RRC operates within each communicating party (e.g. UE 1 and base station 2) as a control center for all of the lower layers within each system, the lower layers within the UE or the base station representing 'Radio Resources', that is resources required to enable radio communication. The RRC is configured to control all these Radio Resources (for example PHY, MAC, RLC, etc) by configuring them to enable communication between UE and the base station (for example gNB).

The behaviour and functions of RRC are defined by the current state of RRC.

For example in 5G NR, the RRC defines three states (or modes):
- A RRC Idle state (or idle mode) called RRC_IDLE state,
- A RRC connected state (or connected mode) called RRC_CONNECTED state, and
- A RRC inactive state (or inactive mode) called RRC_INACTIVE state.

The 'RRC INACTIVE' state is a state introduced in NR.

For each RRC state, applicable functions are defined according the 3GPP NR standard. Further, the state transitions between two RRC states are defined by state transitions conditions. The state transitions condition may be represented by a state machine.

The UE 1 may be in RRC idle state, after power up.

When a UE 1 wants to connect for outgoing data, calls or SMS (Short Messaging Service), the UE 1 establishes connection with the network using an initial access via RRC connection establishment procedure.

Once the RRC connection is established, the UE is in RRC_CONNECTED state.

In an application of the disclosure to a 5G NR communication system 100, the UE 1 may be in the RRC_CONNECTED state when an RRC connection has been established or in the RRC_INACTIVE state when the RRC connection is suspended. Otherwise (if no RRC connection is established), the UE 1 is in RRC_IDLE state.

The UE 1 may share a random-access channel (RACH) to access the network for communications.

For example, the RACH may be used to setup calls, to access the network for data transmissions, for initial access to a network when the UE transitions from the RRC connected state (RRC_CONNECTED) to the RRC inactive state (RRC_INACTIVE state), or for handover.

UEs in RRC_INACTIVE state may transition into RRC_CONNECTED mode using a RRC resume procedure to transmit user-plane data. This transition may require completing the RACH procedure.

RACH may be used for downlink (DL) and/or uplink (UL) data arrival when the UE device 1 is in RRC idle state (RRC_IDLE) or in the RRC inactive state (RRC_INACTIVE), or transitions to the RRC connected state (RRC_CONNECTED).

The Random Access (RACH) procedure refers to the procedure where the User Equipment (UE) 1 requires the creation of an initial connection with a network 3 using the RACH channel.

Once the RACH procedure is completed, the UE 1 may move to the connected state (RRC_CONNECTED state).

In an application of the disclosure to 5G NR, the RACH procedure may be implemented to:
- Initial access from RRC_IDLE;
- RRC Connection Re-establishment procedure;
- Handover;
- DL or UL data arrival during RRC_CONNECTED when UL synchronisation status is "non-synchronised";
- Transition from RRC_INACTIVE;
- To establish time alignment at SCell addition;
- Request for Other Synchronization Information; or
- Beam failure recovery.

The RACH procedure (also 'called Random Access process') may be performed in 4 steps (4-step RACH procedure) or 2 steps (2-step RACH procedure). To facilitate the understanding of the embodiments of the invention, the conventional RACH procedures are described.

The conventional four step RACH procedure comprises exchange of 4 signals. In a first step (step 1), the UE 1 sends a Random Access Preamble Transmission in a message Msg1 to the base station 2 to transmit the RACH preamble on a determined PRACH time-frequency resource to an appropriate beam of the base station 2. In a second step (step 2), the base station 2 sends to the UE 1 a Random Access Response in a second message Msg2 (RA response over the PDSCH channel), the random access response comprising parameters such as the random access preamble identifier, timing alignment information, initial uplink grant and a temporary cell radio network temporary identifier (C-RNTI). In a third step (step 3), the UE 1 sends a Scheduled UL Transmission in a third message Msg3, comprising uplink scheduling information, over the PUSCH channel. In a fourth step (step 4), the base station 2 sends to the UE 1 Contention Resolution in a fourth message Msg4.

Alternatively, the RACH procedure may be performed in 2 steps (2-step RACH procedure) using 2 signals exchanged between the UE and the base station (gNB), for example in a 5G NR network.

The 2-step RACH is applied to RRC_inactive and RRC-connected and RRC-IDLE states.

The RACH channel structure comprises a RACH preamble and data.

According to the conventional 2-step RACH procedure, in a first step (step 1) a first message MsgA may be sent from the UE 1 to the base station 2 on the physical random access channel (PRACH).

According to the two-step RACH procedure, a first message MsgA is sent from the UE to the base station on a physical random access channel (PRACH).

In a second step (step 2), the base station 2 responds with a random access response (RAR) message MsgB which may include the ID of the RACH preamble, a timing advance (TA), a back off indicator, a contention resolution messages, UL/DL grant, and a transmit power control (TPC) commands.

The following description of some embodiments of the invention will be made with reference to the 2-step RACH procedure for illustration purpose, although the invention applies to any similar RACH process such as 4-step RACH procedure comprising steps equivalent to step 1 of the 2-step RACH procedure. Indeed, step 1 of the 2-step RACH procedure is equivalent to step 1 and step 3 of the 4-step RACH procedure and step 2 of the 2-step RACH procedure is equivalent to step 2 and step 4 of the 4-step RACH procedure.

The conventional two-step RACH procedure comprises:
- Transmitting a message MsgA from the UE1 to the base station 2; and
- Transmission of a message MsgB from the base station 2 to the UE1.

The message MsgA comprises:
- A PRACH Preamble Transmission; and
- A PUSCH Transmission.

The transmission of the PRACH preamble by the UE 1 to the base station 2 comprises a step of selecting a Preamble and a step of transmitting the selected Preamble (similarly to the 4-Step RACH procedure).

The conventional PRACH preamble selection comprises selecting a preamble among a number K of available preambles (for example K=64 in 5G NR).

In response to the msgA transmission, the UE 1 expects a Response from the base station 2 comprising the MsgB information.

PRACH Preamble transmission may be made within a configurable subset of RACH slots that repeats itself every RACH configuration period, within a cell.

Each RACH Slot comprises a number of RACH occasions.

A RACH Occasion (RO) refers to an area specified in time and frequency domain that are available for the reception of RACH preamble, and indicates how many different resources there are for each RACH slot. Therefore, within each RACH Slot, there may be a number of RACH occasions which indicates how many different resources there are for the RACH slot.

A PRACH Occasion specifies when to send PRACH. In NR, the time and frequency resource on which a PRACH preamble is transmitted is defined as a PRACH occasion.

The message MsgA comprises a message payload having a payload size.

In existing 2-step RACH procedures, the PRACH preamble and the PUSCH are sent in two separate transmissions in different time slots and cannot be transmitted in the same slot, so that latency can appear in the RRC connection and the resource consumption might increase.

Embodiments of the present disclosure provide a UE 1 and a method implemented in a UE1 to perform an enhanced RACH procedure, in which a DMRS part and a PUSCH data part are transmitted in a single transmission according to an enhanced PUSCH format transmission (called PUSCH++ transmission), instead of using two separated transmissions starting in two different slots like in the conventional 2-step or 4-step RACH procedures.

As used herein, a single transmission of a message refers to a contiguous allocation of resources in time domain. If the message is split into multiple parts with non-contiguous time resources, i.e. if there is a time gap between the different parts, the message is transmitted via multiple transmissions.

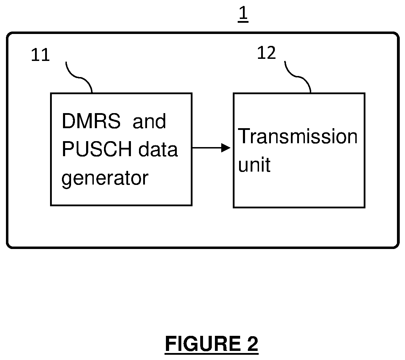

Figure 2 depicts a User Equipment 1 implementing an enhanced RACH procedure according to the embodiments of the disclosure.

The User Equipment 1 comprises a DMRS and PUSCH data generator 11 configured to generate a DMRS part and a PUSCH data part of the PUSCH++ using RRC parameters (DMRS stands for DeModulation Reference Signal). The RRC parameters may be previously configured by the base station 2 to which the PUSCH++ transmission is to be sent. The DMRS serves as the preamble of the PUSCH++ transmission and is used as well for PUSCH demodulation.

According to the claimed embodiment, the User Equipment 1 comprises a transmission unit 12 configured to transmit both the DMRS part and the PUSCH data of the PUSCH ++ to the base station in a single transmission corresponding to as same time slot.

DMRS (DeModulation Reference Signal) represents a special type of physical layer signal which operates as a reference signal for decoding PUSCH. DMRS refers to the uplink user's shared channel Demodulation Reference Signal (DMRS) that is transmitted in each resource block allocated to the user equipment.

According to the claimed embodiment of the invention, DMRS is used in the PUSCH++ as a preamble comprising UE detection information enabling the base station to recognize the UE identity (UE detection information).

The PUSCH data part of the PUSCH++ comprises UE synchronization information to be used by the base station to perform synchronization. The PUSCH data part in the PUSCH++ comprises data used for the RRC connection messages.

According to the claimed embodiment of the invention, the transmission of the message MsgA of the 2-step RACH procedure therefore comprises transmitting an enhanced PUSCH++ comprising:
- DMRS data as a preamble, and
- PUSCH data.

Advantageously, the DMRS data and the PUSCH data are transmitted together at the same time.

According to the embodiments of the disclosure, MsgA according to the proposed enhanced PUSCH format (PUSCH++ format) is therefore transmitted in a single transmission and replaces the two transmissions starting in two different slots of the prior art 2-RACH procedure that conventionally comprises a short preamble sequence's transmission and a PUSCH transmission in MsgA.

The embodiments of the disclosure therefore allow decreasing the transmission and decoding time of MsgA at the base station 2 (gNB). This leads to a decrease of initial access time of the User Equipment 1. The embodiments of the disclosure based on the PUSCH++ transmission also enable a reduction of the resource consumption in the RACH procedure.

The amount of resources for the PUSCH++ may be configured. The resources for the PUSCH++ may be set in time and frequency. The time part of the PUSCH++ resources indicates the duration of the PUSCH++ and the frequency part of the PUSCH++ resources indicate its bandwidth.

The time part of the PUSCH++ resources indicates how often it is occurring in UL and the frequency part of the PUSCH++ resources indicates how wide the resources are.

A PUSCH++ Occasion (PO) associated with a PUSCH++ transmission is defined by a frequency resource and a time resource and is associated with a DMRS resource. A PUSCH++ occasion therefore provides time and frequency resources where a UE can send PUSCH++ in the PUSCH++ transmission.

Each DMRS preamble is mapped to a specific PUSCH++ Occasion, in frequency and time domain.

By detecting the DMRS preambles of the PUSCH++, the base station 2 can therefore identify exactly which PUSCH++ Occasion to decode.

The message payload in PUSCH++ may depend on the event ('triggering event') that triggered the RACH procedure or the SDT (small Data transmission) procedure. The triggering event may be for example an initial access, a handover, a RRC resume request, etc. The payload size may be for example equal to 56 bits or 72 bits. Larger payloads may be used for the small data transmission (SDT) use case. In 3GPP Release 17, Small Data Transmission (SDT) WI was approved and is driven by radio layer RAN2 (RAN stands for Radio Access Network) to reduce the latency for transmission of small packets if the UE is in a RRC_INACTIVE state.

The embodiments of the disclosure also enable a flexible configuration of DMRS and of the PUSCH data.

In some embodiments, in the allocated resource, the DMRS part and/or the PUSCH data part may have different lengths and/or power levels having values selected so as to serve the applications with different requirements of the UE detection and data decoding (requirements of the applications and/or channel conditions), and thereby obtain difference performances of the DMRS detection and data decoding.

The enhanced PUSCH format, PUSCH++, provided for transmission of the message MsgA of the 2-step RACH procedure, is accordingly used to transmit the information for UE detection, synchronization and the RRC connection data in the same transmission.

The PUSCH++ may advantageously have a short preamble format.

Short preambles are based on a sequence length L equal to 139.

In one embodiment, the PUSCH++ length may be equal to 139 Res. Although the following description of some embodiments will be made with reference to a PUSCH++ length equal to 139 Res, the skilled person will readily understand that the invention is not limited to such length and encompasses other short PUSCH++ lengths strictly inferior to 839 REs (a long preamble length is typically higher or equal to 839 REs).

In some embodiment, the PUSCH++ may use one short preamble format among the predefined short preamble PRACH formats or any equivalent or similar short preamble format.

Differences in the time domain of different preamble formats include different Cyclic Prefix length, Sequence Length, Guard Period length and/or number of repetitions.

Short PRACH preambles defines the number of repetitions of the PUSCH++ preamble sequence associated with the format in a RACH occasion (indicating that the preamble sequence is repeated after every L OFDM symbols).

A short length format refers to a preamble format in which the Sub-carrier Spacing SCS is a "normal" SCS (for example 15kHz, 30kHz or whatever the cell is operating at) and the Cyclic Prefix lengths depends on the cell size.

For example, in 5G NR, the supported short PRACH preamble formats are called Format B1, Format B2, Format B3, Format B4, Format C0, and Format C2.

Short preamble formats of types A and B are identical except that B formats have shorter cyclic prefix.

Such short preambles formats are particularly suitable for applications of the invention to indoor deployment scenarios and small/medium cells, although the disclosure is not limited to such applications.

For short PRACH preambles, there may be multiple RACH occasions (RO) in the frequency domain and in the time domain within a single RACH slot.

The DMRS of the enhanced PUSCH transmission (PUSCH++) is used for the synchronization between the base station 2 and the user equipment 1 and replaces the prior art short PRACH preamble and the data part of PUSCH used for the RRC connection messages (such as RRC connection request, reestablishment, or handover) in the prior art 2-step RACH procedure.

A PRACH configuration includes a parameter specifying the number of PRACH occasions within a slot, i.e. multiple occasions of the basic PRACH format.

Figure 1, there is shown an exemplary communication system 100 in which embodiments of the present disclosure may be implemented.

Figure 2 depicts a User Equipment 1 implementing an enhanced RACH procedure according to the embodiments of the disclosure.

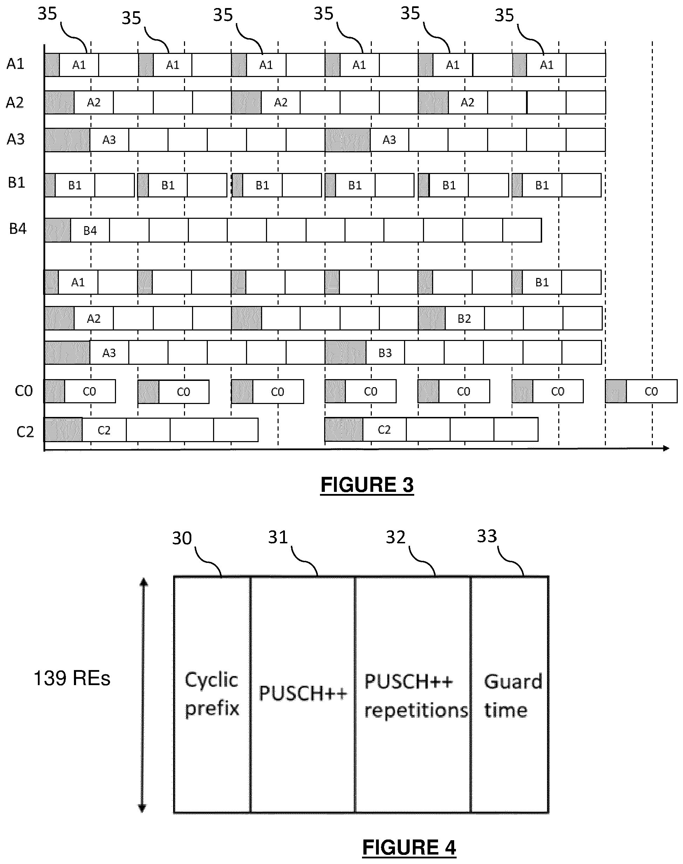

Figure 3 shows exemplary existing short length PRACH preamble formats that may be used as the format of the PUSCH++ according to the some embodiments of the disclosure. For example, format A1 is configured with 6 occasions (represented by reference 35), format A2 with 3 occasions, format A3 with 2 occasions, format B1 with 6 occasions, format B4 with one occasion.

According to the embodiments of the disclosure, the length of the PUSCH++ is therefore the same as a short PRACH preamble length sequence (typically L=139) and accounts for the same resources as a short PRACH preamble sequence.

However, the PRACH preamble transmission and PUSCH transmission in the different slots are replaced by the PUSCH++ transmission which both includes a DMRS part and PUSCH data sent in a same time slot.

Figure 4 illustrates the PUSCH++ transmission according to an exemplary configuration.

As shown in figure 4, according to the embodiments of the disclosure, the PUSCH++ transmission replaces the conventional PRACH preamble transmission.

The PUSCH++ message Transmission comprises:
- a cyclic prefix (CP) 30,
- the PUSCH++ transmission 31 comprising the DMRS and the PUSCH data.

The PUSCH++ transmission may further comprise PUSCH++ repetitions 32, and/or a Guard Time 33 which refers to an unused portion of time up to the end of the last subframe occupied by the PUSCH++.

The PUSCH++ is defined by a given length L (L typically equal to 139 for short length messages) corresponding to a number of Resource Elements (REs), a given duration D and a given Subcarrier Spacing (SCS). The PUSCH++ comprises the DMRS part and the PUSCH data part in the number of Resource Elements defining its length.

Each short PUSCH++ format defines a given subcarrier spacing SCS (in kHz) corresponding to the spacing between two subcarriers, a short PUSCH++ length corresponding to the length of the PUSCH++ in terms of REs, a given bandwidth (in kHz) corresponding to the bandwidth of the PUSCH++, a given CP+sequence duration (in µs) corresponding to the duration of the CP added to the duration of the PUSCH+ sequence and a total duration corresponding to the added durations of the CP, and of the PUSCH++.

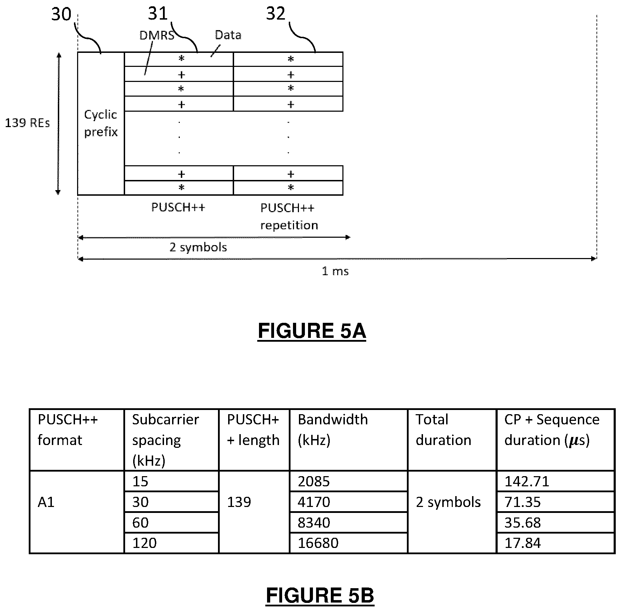

Figure 5 depicts an exemplary PUSCH++ transmission with a cyclic prefix 30, a PUSCH ++ transmission 31, and one or more PUSCH++ repetitions 32. The DMRS is represented by the sign "+" while the PUSCH data are represented by the sign "*". Such representation will be used in similar figures.

In the example of Figure 5, the length of the PUSCH++ is 139 (short preamble length format) that accounts for 139 subcarriers in a duration of one symbol in SCS of 15 kHz, 30 kHz, 60 kHz and 120 kHz. The PUSCH++ is repeated one time one PUSCH++ repetition 32) with the same content as the first PUSCH++ in an occasion. Therefore, the total duration of the PUSCH++ format A1 is equal to 2 symbols. There is no cyclic prefix or guard period between the two PUSCH++.There is a cyclic prefix 31 at the beginning of the first PUSCH++ and no guard period at the end of the second PUSCH++.

The 139 subcarriers of the PUSCH++ comprise DMRS and the PUSCH data. The DMRS part is used by the base station 2 to identify the UE 1 and do synchronization between the base station 2 and the UE 1. The PUSCH data part comprises messages of the RRC connection such as a connection request, a reestablishment, or a handover.

Therefore, MsgA with PUSCH++ is transmitted in a single transmission instead of the two conventional transmissions starting in two different slots in the prior art 2-step RACH procedure.

An example of DMRS and data allocation in short PUSCH++ format A1 is shown in Figure 5. In the example of figure 5, there are 139 resource elements (REs) in one PUSCH++. Among the 139 REs, there are 69 REs allocated to the DMRS and 70 REs allocated to the PUSCH data of the PUSCH++.

The DMRS configuration may be a DMRS configuration Type 1 where DMRS is allocated to every second subcarrier, like in the example of figure 5.

The generator 11 may be configured to generate the DMRS based on a Zadoff-Chu based sequence. A Zadoff-Chu (ZC) sequences enable encoding up to a number of DMRS preambles, through a combination of different cyclic shifts and roots.

The generation of the DMRS sequence may comprise:
- Generating a Zadoff-Chu (ZF) root Sequence;
- Performing cyclic shift which comprises applying cyclic shift to the generated base Zadoff-Chu root Sequence by a term, which provides an intermediary sequence. Several other intermediary sequences may be generated from the Zadoff-Chu root Sequence by applying cyclic shifting;
- Spreading the generated intermediary sequence over frequency domain, which provides a DMRS sequence by applying FFT (Fast Fourier transform).

The ZF sequence may be a length-139 ZC sequence.

Therefore, the DMRS may be generated from a Zadoff-Chu sequence with cyclic shift being applied to the ZF root sequences.

The resource allocation for the DMRS part and for the PUSCH data may be changed to adapt to channel conditions and/or to different applications having specific requirements for DMRS detection and data decoding.

The base station 2 may configure the DMRS and/or the data resources in the PUSCH++ for the UE 1, based on various requirements such as requirement for the UE detection and data decoding, channel conditions, and/or the configuration of other UEs in the cell served by the base station 2.

Figure 1, there is shown an exemplary communication system 100 in which embodiments of the present disclosure may be implemented.

Figure 2 depicts a User Equipment 1 implementing an enhanced RACH procedure according to the embodiments of the disclosure.

Figure 3 shows exemplary existing short length PRACH preamble formats that may be used as the format of the PUSCH++ according to the some embodiments of the disclosure.

Figure 4 illustrates the PUSCH++ transmission according to an exemplary configuration.

Figure 5A depicts an exemplary PUSCH++ transmission with a cyclic prefix 30, a PUSCH ++ transmission 31 and one or more PUSCH++ repetitions 32. The DMRS is represented by the sign "+" while the PUSCH data are represented by the sign "*". Such representation will be used in similar figures.

Figure 5B shows exemplary parameters of short PUSCH++ format A1 with different subcarrier spacing. In this format, there are 6 PUSCH++ occasions in a slot. The UE can repeat PUSCH++ in these occasions if it is configured by the base station 2.

The DMRS in the short PUSCH++ format thereby assumes the role of short preamble sequence. DMRS carried by the PUSCH++ transmission enables identifying the UE 1 and synchronize time between the base station 2 and the UE 1. The may be also used to identify the data Resource Elements for the preamble in an orthogonal multiplexing of the UEs.

The short preamble format used for the PUSCH++ may use or not PUSCH++ repetition(s).

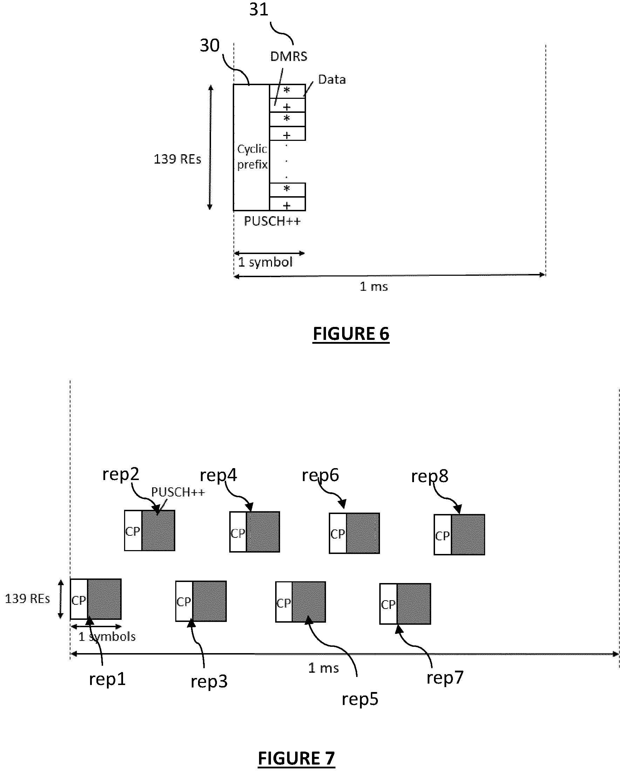

Figure 6 depicts another exemplary short preamble format that can be used as the format of the PUSCH++. In the example of figure 6, the format is the short PRACH preamble Format A5, where there is no repetition of PUSCH++ in a PUSCH++ occasion. In such format, one PUSCH++ occasion accounts for one symbol. The PUSCH++ has a length of 139 REs shared between the DMRS and the PUSCH data of the PUSCH++. The Cyclic prefix CP of format A5 is a normal cyclic prefix. The number of PUSCH++ occasions for such format A5 can be up to 14.

After transmission in a single time slot of the PUSCH++, the PUSCH++ transmission may be received by the base station 2. In response to the reception at the base station 2 of the PUSCH++ transmission, the base station 2 may be configured to detect the DMRS part of the PUSCH++ transmission and decode the data included in the PUSCH++ transmission of MsgA. Several cases may occur depending on whether the DMRS part has been successfully detected or not, and the whether the data part has been successfully decoded or not.

In a first case, if the DMRS part is successfully detected and the data part of the PUSCH++ transmission is successfully decoded, the base station 2 may sends a successful Random Access Response (RAR) with a Timing Advance (TA) command to the UE 1. The Timing Advance (TA) command is sent by Base Station 2 to UE 1 to adjust its uplink transmission (i.e. in order to have the UE 1 send UL symbols). The UE 1 may then acquire the TA and terminate the RACH procedure.

In a second case, if the DMRS part is successfully detected but the decoding of data part of the PUSCH++ transmission fails, the base station 2 may acquire the TA and retransmit the payload in the PUSCH++ or in a conventional PUSCH transmission.

In a third case, if the detection of the DMRS part fails, the base station 2 will send no RAR to the UE 1 because the base station 2 does not know about the PUSCH++ transmission of the UE 1. To address this case, a timer may be set when the UE 1 transmits the PUSCH++ and if the UE 1 does not receive any RAR when the time set by the timer expires, the UE 1 may retransmit the PUSCH++ to attempt random access again. The UE 1 may change one or more PUSCH++ parameters such as the power transmission and/or the number of RACH occasions used for that sequence in the retransmission in order to increase the detection probability

In a fourth case, if the base station 2 detects multiple identical DMRS sequences from several user equipments 1, the base station 2 may not send any RAR to the UE 1 and transmit instead a backoff indication to the UE 1. In response to the reception of the backoff indication, the UE 1 may attempt random access again after backoff time.

In some embodiments, to increase the performance of DMRS detection and data decoding, the base station 2 may configure the UE 1 through the RRC mechanism in order to have the user equipment 1 transmit automatically a plurality of PUSCH++ repetitions comprising the DMRS sequence and a RRC message, in the consecutive available PUSCH++ occasions in a time slot, without waiting for a RAR or the end of the timer.

The number of PUSCH++ repetitions transmitted automatically in the consecutive available PUSCH++ occasions may be configured by the base station 2 through RRC based on channel conditions, reliability requirements and/or latency requirements of the initial access procedure at the UE 1.

A DMRS sequence may be repeated in the repetitions, in the PUSCH++ occasions.

If the PUSCH++ repetitions in the PUSCH++ occasions are in the same slot, DMRS in the repetitions in the PUSCH++ occasions can be the same version or the parts of a longer DMRS sequence divided among the repetitions in the PUSCH++ occasions. If the PUSCH++ repetitions in the PUSCH++ occasions are in different slots, DMRS in the repetitions in the PUSCH++ occasions may have the same version.

A longer DMRS sequence refers to a longer DMRS sequence that may be used and then divided into multiple parts transmitted in the repetitions in the PUSCH++ occasions. This means that the DMRS sequence is divided into elementary DMRS parts, and then the different elementary DMRS parts are included in different repetitions in the PUSCH++ occasions, each repetition including a different elementary part of the DMRS. In embodiments using a longer DMRS sequence, a cyclic shift, larger than the cyclic shift used when PUSCH++, is not repeated in multiple PUSCH++ occasions may be used in the DMRS generation phase in order to generate the same number of sequences as when a short DMRS sequence is used if PUSCH++ is not repeated in multiple PUSCH++ occasion. This enables supporting a larger cell range without reducing Root sequence reuse pattern.

Data in the repetitions in the PUSCH++ occasions may be the same version or different versions.

More specifically, a codeword (i.e. PUSCH data in PUSCH++) in PUSCH++ repetitions in the PUSCH++ occasions may be repeated in the same version or in different versions.

As used herein, a "different version" of a codeword refers to:
- a codeword with different redundancy versions,
- to different parts of a codeword that is divided into multiple parts spread among the transmissions in the PUSCH++ occasions, or
- to codewords of the segments of a large transport block.

Some bits may be multiplexed with data in the PUSCH++. For example, PUCCH bits may be multiplexed on the PUSCH to indicate to the base station the version of codeword in a repetition.

In a case where the base station 2 successfully detects the DMRS and decodes the PUSCH data in the PUSCH++ received from a UE 1, it may send a RAR to stop the repetitions and avoid the collision of that UE 1 with other UEs in the configured PUSCH++ occasions.

To increase frequency diversity, the PUSCH++ repetitions may be configured to be in the PUSCH++ occasions in different frequencies following a frequency hopping pattern. A frequency-hopping operation applied to a replica corresponding to a repetition over a frequency bandwidth consist in generating a hopping sequence comprising a number of components for the replica, each replica hopping component corresponding to a frequency hop. The number of frequency hops may be the same for each repetition.

Figure 7 represents exemplary PUSCH++ repetitions.

In the example of figure 7, the UE 1 is configured to transmit 8 repetitions of short PUSCH++ format A5 (rep1, rep2, rep3, rep4, rep5, rep6, rep7 and rep8) in 8 PUSCH++ occasions with frequency hopping. The UE 1 does not have to transmit all 8 repetitions 80 if it receives, from the base station 2, a signal to stop.

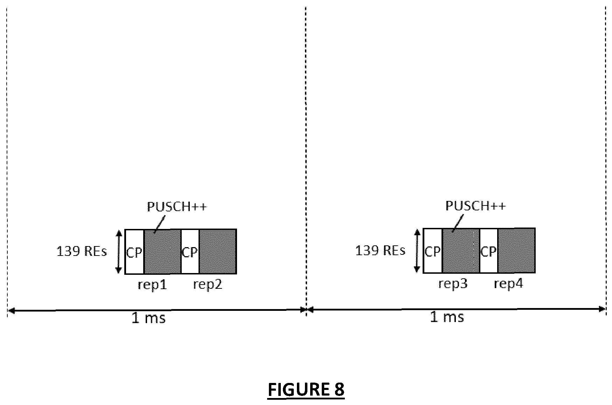

The repetitions may be performed in the same positions in different slots. For example, considering a UE 1 configured with four repetitions, two of these repetitions may be in a slot (rep1 and rep2) and the other two repetitions (rep3 and rep4) may be in the next slot with the same position in a slot as the first two repetitions as shown in Figure 8 which depicts repetitions in different slots. In this case, DMRS in the repetitions in the PUSCH++ occasions have the same format.

The base station 2 may configure the PUSCH++ repetitions in the PUSCH++ occasions that are in different frequencies.

In response to the successful detection of DMRS and decoding of PUSCH data in the PUSCH++, the base station 2 may be configured to insert a repetition flag in the RAR message, so that the User Equipment 1 may stop the repetitions in response to the reception of a RAR including the repetition flag from the base station 2.

The repetitions in the PUSCH++ occasions can have different PUSCH++ formats.

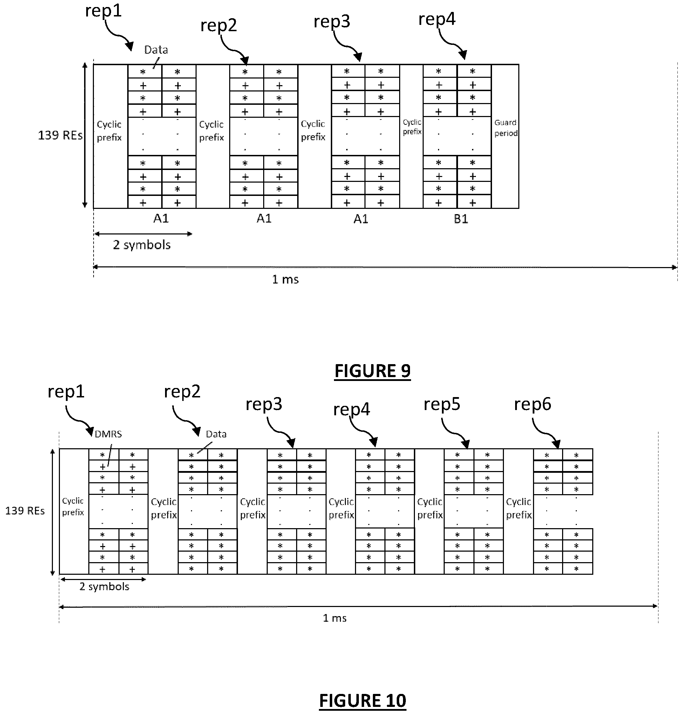

Figure 9 represents exemplary PUSCH++ repetitions 32 which have different PUSCH++ formats.

In the example of Figure 9, the UE 1 is configured to transmit 4 repetitions rep1, rep2, rep3 and rep 4 (the repetitions generally correspond to reference 32) in 4 consecutive PUSCH++ occasions. The first three repetitions rep1, rep2 and rep3 have a format A1 and the last repetition rep4 has a format B1. Using a format B1 in the last repetition enables providing a guard period property to format A1 without effectively using a guard period in order to avoid inter-symbol interference.

A repetition in a PUSCH++ occasion may be configured to contain only PUSCH data.

Figure 10 depicts an exemplary PUSCH++ transmission comprising 6 repetitions of PUSCH++ (rep1, rep2, rep3, rep4, rep5 and rep 6). In this example, the UE 1 is configured to transmit the 6 repetitions of PUSCH++ in 6 occasions. The 6 repetitions have a format A1 (rep1, rep2, rep3, rep4, rep5 and rep 6). The PUSCH Data and the DMRS (+) are only multiplexed (DMRS and PUSCH data is transmitted together in a symbol) in the first repetition rep 1 in the first PUSCH++ occasion while the next five repetitions (rep2, rep3, rep4, rep5 and rep 6) only contain PUSCH data. The first repetition corresponds to the first PUSCH++ transmission (ref 30 in figure 5).

In embodiments where the UE 1 is configured to transmit a number of PUSCH++ repetitions 32 in multiple PUSCH++ occasions, a repetition in a PUSCH++ occasion may be configured to only contain DMRS.

For example, the first repetition in the first occasion may be configured to only contain DMRS to enable the UE detection by the base station while the next repetitions in the following occasions may only contain PUSCH data (with the same version or different redundancy versions among the repetitions). As DMRS and PUSCH data are not multiplexed in a symbol, in the PUSCH++ transmission, this enables a preservation of the low peak-to-average ratio property of DMRS. This further enables using for the DMRS sequence the same length as the short preamble length (typically 139 Res).

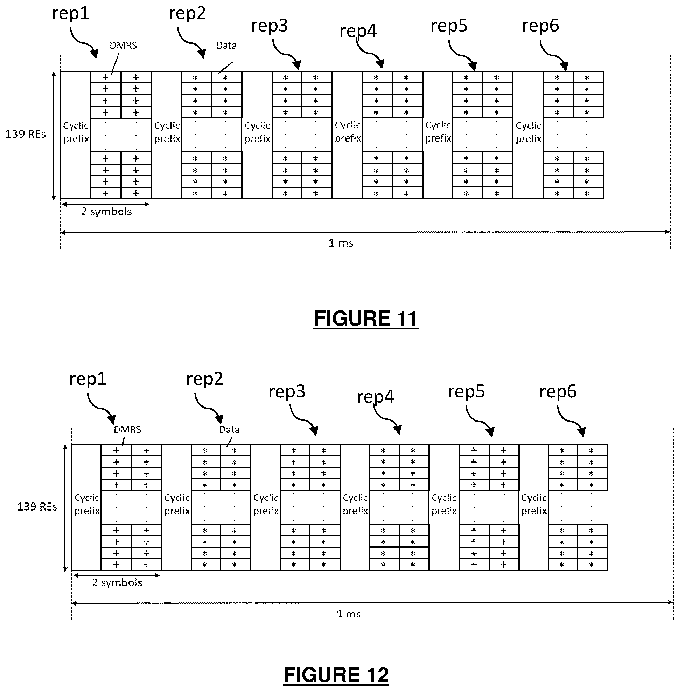

Figure 11 depicts an exemplary PUSCH++ transmission comprising 6 repetitions of PUSCH++ (rep1, rep2, rep3, rep4, rep5 and rep 6). In this example, the UE 1 is configured to transmit the 6 repetitions of PUSCH++, each having a format A1, in 6 occasions. The first repetition rep 1 only contains DMRS while the next five repetitions (rep1, rep2, rep3, rep4, and rep5) only contain PUSCH data.

To improve channel estimation, besides the first repetition that only contains DMRS in such embodiment, an additional repetition may be configured to contain DMRS. In such case, the additional repetition may contain the same DMRS sequence as the first repetition or the second part of a longer DMRS sequence.

Figure 12 depicts an exemplary PUSCH++ transmission comprising 6 repetitions of PUSCH++ (rep1, rep2, rep3, rep4, rep5 and rep 6). In this example, the UE 1 is configured to transmit the 6 repetitions of PUSCH++, each having a format A1, in 6 occasions. The first repetition rep 1 only contains DMRS while the next four repetitions (rep1, rep2, rep3, rep4) only contain PUSCH data. However, the fifth repetition rep 5 only contains DMRS besides the first repetition rep 1.

The presence of an additional repetition containing DMRS in this embodiment allows doing frequency hopping among the repetitions. The first repetition with DMRS in the first bandwidth part is used to estimate the channel to decode PUSCH data in that bandwidth part. The second repetition with DMRS in the second bandwidth part is used to estimate the channel to decode PUSCH data in that bandwidth part.

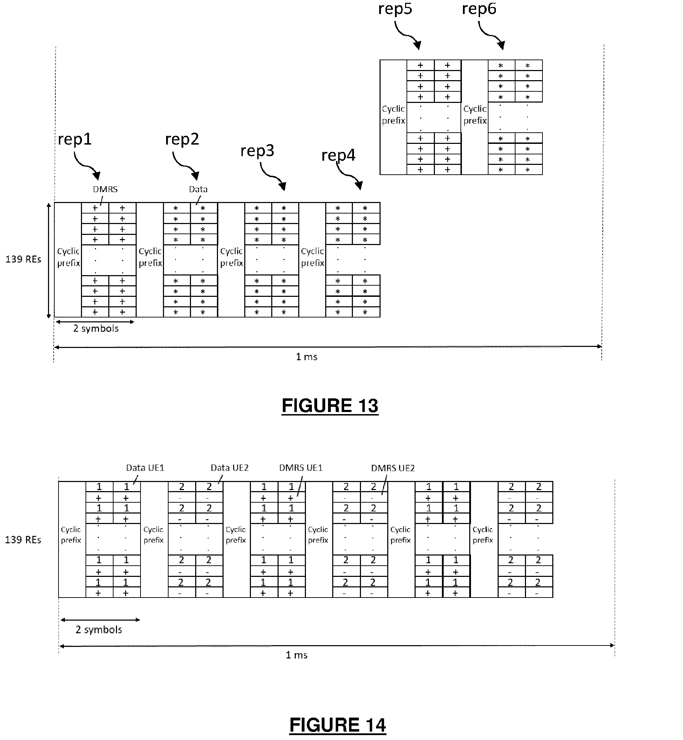

Figure 13 depicts an exemplary PUSCH++ transmission in which Frequency hopping is performed, among the repetitions, using the same repetitions as figure 12 with two repetitions containing only DMRS (rep 1 and rep5) while the remaining repetitions only contain PUSCH data (rep2, rep3 and rep4).

The base station 2 may configure the number of PUSCH++ repetitions in the consecutive available PUSCH++ occasions by using a new RRC parameter, herein referred to as "nrofrepetitions-PUSCHplus".

The base station 2 may further configure the formats of the different PUSCH++ repetitions through a new RRC parameter, referred to herein as "repetitionformat-PUSCHplus" and the frequency hopping of the repetitions through a new RRC parameter, referred to herein as "freqhopping-PUSCHplus".

The format of the PUSCH++ transmitted by a UE 1 may be configured by the base station 2, through a new RRC parameter, referred to herein as "PUSCHplus-formatindex".

The base station 1 may configure time and frequency resources of PUSCH++ for a UE using conventional RRC parameters.

In some embodiment, the base station 2 may configure the DMRS length and mapping through a new RRC parameter, referred to herein as "dmrs-PUSCHplus-mapping".

The DMRS and the PUSCH data in the PUSCH++ may be transmitted with different power levels which may be configured by the base station 2 through new RRC parameters, referred to herein as "DMRS-PUSCHplus-powercontrol" and "Data-PUSCHplus-powercontrol" respectively.

In some embodiments, the base station 2 may also configure the cyclic shift of the DMRS through a new RRC parameter, referred to herein as "cyclicshift-PUSCHplus", which may be used by the UE1 to generate the number of sequences from a root sequence. The cyclic shift may be chosen to have an appropriate root sequence reuse pattern to support different cell ranges. The base station may preassign the DMRS sequence to a UE1 in a PUSCH++ occasion by indicating to the UE the chosen root sequence. This may be implemented by the base station 2 by sending the index of the chosen root sequence through a RRC parameter, referred to herein as "DMRS-PUSCHplus-rootsequenceindex".

An additional RRC parameter, referred to herein as "ra-PUSCHplusTimer", may be configured by the base station 2 to set the initial value of the counter. In response to the counter reaching a value zero while the UE1 has not received a RAR message from the base station 2 (meaning that the base station 2 has not been able to successfully detect DMRS in PUSCH++), the base station 2 will retransmit PUSCH++ in the closest occasion.

In some embodiments, to avoid collision of the UEs in a PUSCH++ occasion, the UEs 1 may be assigned to transmit in specific occasions.

Figure 14 represents specific PUSCH++ occasions assigned to each UE among a plurality of the UE, in UE multiplexing. In figure 14, the sign "..." is used to indicate the continuous data resources in the frequency domain. The sign "+" is the DMRS of the UE 1. The sign "-" is the DMRS of the UE 2.

In the example of Figure 14, two UEs UE1 and UE2 transmit PUSCH++ format A1. Each slot comprises 6 PUSCH++ occasions. The UE1 is assigned to transmit PUSCH++ in the first, third and fifth occasions while the UE2 is assigned to transmit PUSCH++ in the second, fourth and sixth occasions. In this example, up to 6 UEs may be supported where each UE is assigned to transmit in a unique occasion in a slot.

In some embodiments, the base station 2 may configure different UEs to transmit DMRS only in the first occasion, to reduce the number of blind DMRS detections. DMRS of a UE 1 may be mapped to the PUSCH++ occasions for PUSCH data transmission of that UE, in UE multiplexing. Thereby, the base station 2 can identify the location of the PUSCH data after detecting DMRS of a UE. A UE will only transmit data in the assigned PUSCH++ occasion.

Figure 15 represents an exemplary implementation where the PUSCH++ in the first occasion only contains DMRS in order to indicate the occasions of PUSCH++ only containing PUSCH data in UE multiplexing. In the example of Figure 15, the user equipments UE1 and UE2 are configured to transmit DMRS in the first occasion. The UEs may use the orthogonal ports to transmit DMRS. The UE1 is assigned to transmit data in the second and fourth occasions, the UE2 is assigned to transmit data in the third and fifth occasions. In figure 15, the sign "..." is also used to indicate the continuous resources in the frequency domain.

To multiplex the UEs in a PUSCH++ occasion, a partitioning of the resources for data may be performed, in a FDM (Frequency Division Multiplexing) fashion, among the UEs using that PUSCH++ occasion to transmit PUSCH++. The partitioned resources may be dedicated to the UEs that transmits PUSCH++ in that occasion.

Figure 16 shows an example in which two UEs transmitting PUSCH++ in format A1 are multiplexed in a PUSCH++ occasion. The data resource of a UE belongs to one set of the consecutive PUSCH resources. In this example, the length of DMRS of a UE is the same as the original PUSCH++ but the UE has less resources to transmit data. In the example of figure 16, multiplexing two UEs in a PUSCH++ occasion is performed using the method to assign the specific occasions to the UEs. The UE1 and UE2 transmit PUSCH++ in the first, third and fifth occasions and the UE3 and UE4 transmit PUSCH++ in the second, fourth and sixth occasions. In Figure 16, the sign "+" is the DMRS of the UE 1 and 2. The sign "-" is the DMRS of the UE 3 and 4.Data resources for a UE can be in the consecutive PUSCH resources or every nth PUSCH resources in frequency where n is the number of the multiplexed UEs.

In embodiments where the data resources of a UE 1 are not in consecutive PUSCH resources, the data resources may be partitioned in an interleaved FDM fashion, as illustrated by Figure 17. In Figure 17, the sign "+" is the DMRS of the UE 1 and the UE 2. The sign "-" is the DMRS of the UE 3 and the UE 4.

In the example of figure 17, the data resources of a UE are allocated to every two PUSCH resources, in an interleaved FDM fashion.

Alternatively, non-orthogonal multiple access (NOMA) may be used to multiplex multiple UEs in a PUSCH++ occasion. The base station 2 may be configured to distinguish signals from different UEs through Multiple Access (MA) signature including interleaver, scrambler, spreading sequence, etc. To avoid MA signature collision and DMRS collision, the base station 2 may assign MA signature and DMRS to the UEs.

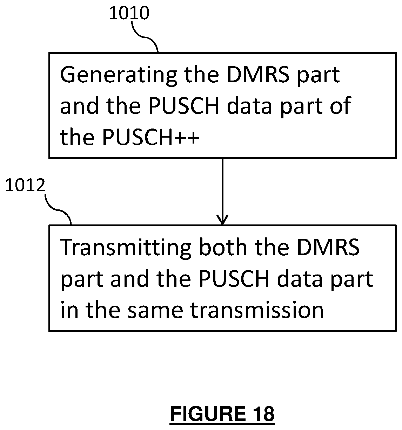

Figure 18 is a flowchart representing a method of performing a RACH procedure to provide the UE 1 access to the network 3 according to embodiments of the disclosure. Figure 18 specifically shows the first step (Step 1) of the 2-step RACH procedure corresponding to message MsgA (this alternatively applies to the equivalent steps Step 1 and Step 3 of the 4-step RACH procedure or to any equivalent RACH procedure comprising at least one step in which at least one RACH message (MsgA for 2-step RACH procedure) is sent from the UE 1 to the base station 2 on one or more uplink channels.

The message MsgA comprise an enhanced PUSCH data transmission (PUSCH++ transmission) comprising a DMRS part and a PUSCH data part. The DMRS part in the PUSCH++ plays the role of the preamble similarly to the conventional RACH procedure.

According to the embodiments of the invention, the method comprises generating in step 1010 the DMRS preamble for example using a ZC sequence and the PUSCH data part, using RRC parameters to determine the parameters of the DMRS and PUSCH data parts such as one or more RRC parameters among:
- the RRC parameters that indicated the time and frequency resources of PUSCH++ transmission;
- the PUSCHplus-formatindex RRC parameter that indicate the format of PUSCH++ transmission (for example PRACH FORMAT0);
- the dmrs-PUSCHplus-mapping RRC parameter that indicate the DMRS length and the length mapping to determine the PUSCH++ resources that are to be used for the PUSCH data part of the PUSCH++;
- The DMRS-PUSCHplus-powercontrol and the Data-PUSCHplus-powercontrol RRC parameters which provide the transmission powers of the DMRS part and of the PUSCH data part of the PUSCH++;
- The cyclicshift-PUSCHplus RRC parameter to determine the cyclic shift that is to be used to generate the DMRS sequence from a selected root ZC sequence;
- The "nrofrepetitions-PUSCHplus" RRC parameter indicating the number of repetitions to be used in the PUSCH++ transmission;
- The "repetitionformat-PUSCHplus" RRC parameter indicating the format of the PUSCH++ repetition (for example A1, A2, etc.);
- The "freqhopping-PUSCHplus" RRC parameter indicating if frequency hoping is to be used in the repetitions; and/or
- The DMRS-PUSCHplus-rootsequenceindex RRC parameter which indicates to the UE 1 the index of the root ZC sequence selected to generate the DMRS.

In step 1012, the DMRS preamble and the PUSCH data part of the PUSCH++ are transmitted in a same time slot, with or without PUSCH++ repetitions depending on the application of the invention.

The base station 2 may comprise a receiving unit configured to receive the signal transmitted by the User Equipment and decode the received signal to recover the original data. It should be noted that the base station 2 implements a reverse processing of the processing implemented in transmission.

The UE 1 may be any physical internet-enabled device/object provided with required hardware and/or software technologies enabling communication over Internet. The UE 1 may be any standard internet connected-devices such as desktop computers, servers, virtual machines laptops, smart-phones, tablets. In some applications of the disclosure, the UE 1 may be any loT/M2M device or connected device operating in an loT/M2M network such as medical devices, temperature and weather monitors, connected cards, thermostats, appliances, security devices, drones, smart clothes, eHealth devices, robots, and smart outlets.

Embodiments of the present disclosure can take the form of an embodiment containing software only, hardware only or both hardware and software elements.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

It should be noted that the functions, acts, and/or operations specified in the flow charts, sequence diagrams, and/or block diagrams may be re-ordered, processed serially, and/or processed concurrently consistent with embodiments of the disclosure. Moreover, any of the flow charts, sequence diagrams, and/or block diagrams may include more or fewer blocks than those illustrated consistent with embodiments of the disclosure.

While embodiments of the disclosure have been illustrated by a description of various examples, and while these embodiments have been described in considerable detail, it is not the intent of the applicant to restrict or in any way limit the scope of the appended claims to such detail.

The communication system 100 according to the embodiments of the disclosure may be used in various applications such as Massive MTC (mMTC) to provide connectivity to a large number of devices that transmit sporadically a low amount of traffic, Machine-To-Machine (M2M), Web-of-Things (WoT), and Internet of Things (IoT) (for example vehicle-to-everything V2X communications) involving networks of physical devices, machines, vehicles, home alliances and many other objects connected to each other and provided with a connectivity to the Internet and the ability to collect and exchange data without requiring human-to-human or human-to-computer interactions.

For example, in loT applications, the communication system 100 may be a wireless network, for example a wireless loT/M2M network representing low energy power-consumption/long battery life/low-latency/low hardware and operating cost/high connection density constraints such as low-power wide area networks and low-power short-range loT networks.

The communication system 100 may be used in various consumer, commercial, industrial, and infrastructure applications. Exemplary consumer applications comprise connected vehicles (Internet of Vehicles loV), home automation/smart home, smart cities, wearable technology, and connected health. Exemplary commercial applications comprise medical and healthcare and transportation. In the medical field, a digitized healthcare system connecting medical resources and healthcare services may be used in which special monitors and sensors are used to enable remote health monitoring and emergency notification. Exemplary industrial applications comprise applications in agriculture, for example in farming using sensors, to collect data on temperature, rainfall, humidity, wind speed, and soil content. Exemplary infrastructure applications may comprise the use of loT devices to perform monitoring and controlling operations of urban and rural infrastructures such as bridges and railway tracks.

Further, the embodiments of the invention are not limited to the 2-step RACH procedure and similarly apply to any RACH procedure including the transmission of a message similar to message MsgA from the UE 1 to the base station 2, such as the 4-step (message Msg1 transmission) from the UE 1 to the base station.

Also, although the disclosure has particular advantages when used for Small Data Transmission (SDT), the embodiments of the disclosure may apply to other types of data transmissions.

## Claims

1. A method of performing a RACH procedure to provide a User Equipment UE access to a network (3) in a communication system (100), the network comprising at least one base station (2), the RACH procedure comprising at least one step in which a RACH message is sent from the UE to the base station on one or more uplink channels, wherein said message comprises an enhanced PUSCH transmission, PUSCH₊₊, comprising a DMRS part and a PUSCH data part, the DMRS part being sent to serve as a preamble, each DMRS preamble sequence being mapped to a specific PUSCH++ occasion in frequency and time domain,
wherein the method comprises transmitting the DMRS part and the PUSCH data part together at the transmission time, said transmission using contiguous allocation of resources in time domain for the DMRS part and the PUSCH data part without any time gap between the DMRS part and the PUSCH data part, the enhanced PUSCH having a short length format based on a sequence length equal to 139 Resource Elements.

2. The method according to claim 1, wherein the DMRS part comprises User Equipment identification information used to identify the User Equipment and/or resource elements for the DMRS part in an orthogonal multiplexing of the user equipments.

3. The method according to claim 1, wherein the PUSCH data comprises the message for initial RRC connection setup, RRC connection reestablishment, handover or cell radio network temporary identifier.

4. The method according to any preceding claim, wherein the DMRS part and the PUSCH data part have different lengths and /or power levels.

5. The method according to claim 4, wherein the base station (2) is associated with a cell, and wherein the length of the DMRS part and/or the length of the PUSCH data part are preconfigured by the base station (2) based on application requirements, channel conditions and/or on the configuration of other user equipments in said cell.

6. The method of any preceding claim, wherein the format of the enhanced PUSCH transmission is a short length PRACH preamble format among a PRACH Format A1, a PRACH format A2, a PRACH format B1, a PRACH format B2 and a PRACH format C2.

7. The method of any preceding claim, wherein the generation of the DMRS part comprises generating the DMRS sequence from a selected root Zadoff-Chu sequence.

8. The method of any preceding claim, wherein the user equipment is configured to transmit automatically a number of PUSCH++ repetitions in consecutive available PUSCH++ occasions, without waiting for the receipt of a Random Access Response from the base station or the end of a timer, using a RRC mechanism.

9. The method of claim 8, wherein if the PUSCH++ repetitions in the PUSCH++ occasions are in a same time slot, the repetitions include a same version of the DMRS in the PUSCH++ occasions or a DMRS sequence is divided into elementary DMRS parts, different elementary DMRS parts being included in different repetitions in the PUSCH++ occasions.

10. The method of claim 8, wherein if the PUSCH++ repetitions in the PUSCH++ occasions are in different slots, the DMRS included in the repetitions in the PUSCH++ occasions are the same.

11. The method of claim 8, wherein the PUSCH data included in the repetitions in the PUSCH++ occasions are the same redundancy version or different redundancy versions.

12. The method of claim 8, wherein the PUSCH++ repetitions in the PUSCH++ occasions are transmitted at different frequencies.

13. The method of claim 8, wherein in response to the reception of a Random Access Response from the base station comprising a repetition flag, the method comprises stopping the PUSCH++ repetitions sent by the user equipment (1).

14. The method of claim 8, wherein one or more PUSCH++ repetition contains only PUSCH data.

15. The method of claim 8, wherein at least one of the PUSCH++ repetitions contain PUSCH data and one or more PUSCH++ repetition contains only DMRS.

16. The method of claim 15, wherein the first repetition contains only DMRS.

17. A User Equipment (1) configured to perform a RACH procedure to access a network (3) in a communication system (100), the network comprising at least one base station (2), the RACH procedure comprising sending a RACH message from the User Equipment (1) to the base station (2) on one or more uplink channels, wherein said message comprises a enhanced PUSCH transmission, PUSCH₊₊, comprising a DMRS part and a PUSCH data part,
the DMRS part being sent to serve as a preamble, each DMRS preamble sequence being mapped to a specific PUSCH++ occasion in frequency and time domain, wherein the User equipment (1) is configured to transmit the DMRS part and the PUSCH data part together at the transmission time, said transmission using contiguous allocation of resources in time domain for the DMRS part and the PUSCH data part without any time gap between the DMRS part and the PUSCH data part, the enhanced PUSCH having a short length format based on a sequence length equal to 139 Resource Elements.

## Patentansprüche

1. Verfahren zum Ausführen einer RACH-Prozedur, um einem Benutzergerät, UE, Zugriff auf ein Netz (3) in einem Kommunikationssystem (100) zu gewähren, wobei das Netz mindestens eine Basisstation (2) umfasst, wobei die RACH-Prozedur mindestens einen Schritt umfasst, in dem eine RACH-Nachricht von dem UE auf einem oder mehreren Uplink-Kanälen zur Basisstation gesendet wird, wobei die Nachricht eine verbesserte PUSCH-Übertragung, PUSCH₊₊, umfasst, umfassend einen DMRS-Teil und einen PUSCH-Datenteil, wobei der DMRS-Teil gesendet wird, um als Präambel zu dienen, wobei jede DMRS-Präambelsequenz auf einen spezifischen PUSCH₊₊-Anlass in dem Frequenz- und Zeitbereich abgebildet wird,
wobei das Verfahren das Übertragen des DMRS-Teils und des PUSCH-Datenteils zusammen zur Übertragungszeit umfasst, wobei die Übertragung eine zusammenhängende Zuordnung von Ressourcen im Zeitbereich für den DMRS-Teil und den PUSCH-Datenteil ohne Zeitlücke zwischen dem DMRS-Teil und dem PUSCH-Datenteil verwendet, wobei der verbesserte PUSCH ein kurzes Längenformat, basierend auf einer Sequenzlänge gleich 139 Ressourcenelementen, aufweist.

2. Verfahren nach Anspruch 1, wobei der DMRS-Teil Benutzergerät-Identifikationsinformationen umfasst, die verwendet werden, um das Benutzergerät und/oder Ressourcenelemente für den DMRS-Teil in einem orthogonalen Multiplexverfahren der Benutzergeräte zu identifizieren.

3. Verfahren nach Anspruch 1, wobei die PUSCH-Daten die Nachricht für die anfängliche RRC-Verbindungseinstellung, RRC-Verbindungswiederherstellung, Weiterreichung oder die vorübergehende Kennung des Funkradionetzes umfasst.

4. Verfahren nach einem der vorhergehenden Ansprüche, wobei der DMRS-Teil und der PUSCH-Datenteil verschiedene Längen und/oder Leistungspegel aufweisen.

5. Verfahren nach Anspruch 4, wobei die Basisstation (2) einer Zelle zugeordnet ist und wobei die Länge des DMRS-Teils und/oder die Länge des PUSCH-Datenteils von der Basisstation (2) basierend auf Anwendungsanforderungen, Kanalbedingungen und/oder der Konfiguration von anderen Benutzergeräten in der Zelle vorkonfiguriert werden.

6. Verfahren nach einem der vorhergehenden Ansprüche, wobei das Format der verbesserten PUSCH-Übertragung ein PRACH-Präambelformat kurzer Länge von einem PRACH-Format A1, einem PRACH-Format A2, einem PRACH-Format B1, einem PRACH-Format B2 und einem PRACH-Format C2 ist.

7. Verfahren nach einem der vorhergehenden Ansprüche, wobei das Generieren des DMRS-Teils das Generieren der DMRS-Sequenz aus einer ausgewählten Wurzel-Zadoff-Chu-Sequenz umfasst.

8. Verfahren nach einem der vorhergehenden Ansprüche, wobei das Benutzergerät dafür konfiguriert ist, automatisch eine Anzahl von PUSCH₊₊-Wiederholungen zu aufeinander folgenden verfügbaren PUSCH₊₊-Anlässen zu übertragen, ohne auf den Empfang einer Direktzugriff-Antwort von der Basisstation oder das Ende eines Zeitmessers abzuwarten, und zwar unter Verwendung eines RRC-Mechanismus.

9. Verfahren nach Anspruch 8, wobei, wenn sich die PUSCH₊₊-Wiederholungen zu den PUSCH₊₊-Anlässen in einem gleichen Zeitschlitz befinden, die Wiederholungen eine gleiche Version des DMRS zu den PUSCH₊₊-Anlässen einschließen oder eine DMRS-Sequenz in elementare DMRS-Teile unterteilt wird, wobei verschiedene elementare DMRS-Teile in verschiedenen Wiederholungen bei den PUSCH₊₊-Anlässen eingeschlossen werden.

10. Verfahren nach Anspruch 8, wobei, wenn sich die PUSCH₊₊-Wiederholungen zu den PUSCH₊₊-Anlässen in verschiedenen Schlitzen befinden, die in den Wiederholungen eingeschlossenen DMRS bei den PUSCH₊₊-Anlässen gleich sind.

11. Verfahren nach Anspruch 8, wobei die in den Wiederholungen bei den PUSCH₊₊-Anlässen eingeschlossenen PUSCH-Daten die gleiche Redundanzversion oder verschiedene Redundanzversionen sind.

12. Verfahren nach Anspruch 8, wobei die PUSCH₊₊-Wiederholungen bei den PUSCH++-Anlässen auf verschiedenen Frequenzen übertragen werden.

13. Verfahren nach Anspruch 8, wobei als Reaktion auf den Empfang einer Direktzugriff-Antwort von der Basisstation, die ein Wiederholungs-Flag umfasst, das Verfahren das Anhalten der PUSCH₊₊-Wiederholungen, die von dem Benutzergerät (1) gesendet werden, umfasst.

14. Verfahren nach Anspruch 8, wobei eine oder mehrere PUSCH₊₊-Wiederholungen nur PUSCH-Daten enthalten.

15. Verfahren nach Anspruch 8, wobei mindestens eine der PUSCH₊₊-Wiederholungen PUSCH-Daten enthält und eine oder mehrere PUSCH₊₊-Wiederholungen nur DMRS enthalten.

16. Verfahren nach Anspruch 15, wobei die erste Wiederholung nur DMRS enthält.

17. Benutzergerät (1), das dafür konfiguriert ist, eine RACH-Prozedur auszuführen, um auf ein Netz (3) in einem Kommunikationssystem (100) zuzugreifen, wobei das Netz mindestens eine Basisstation (2) umfasst, wobei die RACH-Prozedur das Senden einer RACH-Nachricht von dem Benutzergerät (1) auf einem oder mehreren Uplink-Kanälen zur Basisstation (2) umfasst, wobei die Nachricht eine verbesserte PUSCH-Übertragung, PUSCH₊₊, umfasst, umfassend einen DMRS-Teil und einen PUSCH-Datenteil, wobei der DMRS-Teil gesendet wird, um als Präambel zu dienen, wobei jede DMRS-Präambelsequenz auf einen spezifischen PUSCH₊₊-Anlass in dem Frequenz- und Zeitbereich abgebildet wird, wobei das Benutzergerät (1) dafür konfiguriert ist, den DMRS-Teil und den PUSCH-Datenteil zusammen zur Übertragungszeit zu übertragen, wobei die Übertragung eine zusammenhängende Zuordnung von Ressourcen im Zeitbereich für den DMRS-Teil und den PUSCH-Datenteil ohne Zeitlücke zwischen dem DMRS-Teil und dem PUSCH-Datenteil verwendet, wobei der verbesserte PUSCH ein kurzes Längenformat, basierend auf einer Sequenzlänge gleich 139 Ressourcenelementen, aufweist.

## Revendications

1. Procédé d'exécution d'une procédure RACH permettant à un équipement utilisateur (UE) d'accéder à un réseau (3) dans un système de communication (100), le réseau comprenant au moins une station de base (2), la procédure RACH comprenant au moins une étape au cours de laquelle un message RACH est envoyé par l'UE à la station de base sur un ou plusieurs canaux montants, ledit message comprenant une transmission PUSCH améliorée, dite PUSCH₊₊, comprenant une partie DMRS et une partie données PUSCH, la partie DMRS étant envoyée à titre de préambule, chaque séquence de préambule DMRS étant mappée à une occasion PUSCH₊₊ spécifique dans les domaines fréquentiel et temporel,
le procédé comprenant la transmission conjointe de la partie DMRS et de la partie données PUSCH au moment de la transmission, ladite transmission utilisant une allocation contiguë de ressources dans le domaine temporel pour la partie DMRS et la partie données PUSCH sans intervalle de temps entre la partie DMRS et la partie données PUSCH, la transmission PUSCH améliorée ayant un format de courte longueur basé sur une longueur de séquence égale à 139 éléments de ressource.

2. Procédé selon la revendication 1, dans lequel la partie DMRS comprend des informations d'identification d'équipement utilisateur utilisées pour identifier l'équipement utilisateur et/ou des éléments de ressources relatifs à la partie DMRS dans un multiplexage orthogonal des équipements utilisateurs.

3. Procédé selon la revendication 1, dans lequel les données PUSCH comprennent le message pour l'établissement de la connexion RRC initiale, le rétablissement de la connexion RRC, le transfert ou l'identifiant temporaire du réseau radio cellulaire.

4. Procédé selon l'une quelconque des revendications précédentes, dans lequel la partie DMRS et la partie données PUSCH ont des longueurs et/ou des niveaux de puissance différents.

5. Procédé selon la revendication 4, dans lequel la station de base (2) est associée à une cellule, et dans lequel la longueur de la partie DMRS et/ou la longueur de la partie données PUSCH sont préconfigurées par la station de base (2) en fonction de spécifications d'application, de conditions du canal et/ou de la configuration d'autres équipements utilisateur présents dans ladite cellule.

6. Procédé selon l'une quelconque des revendications précédentes, dans lequel le format de la transmission PUSCH améliorée est un format de préambule PRACH de courte longueur parmi un format PRACH A1, un format PRACH A2, un format PRACH B1, un format PRACH B2 et un format PRACH C2.

7. Procédé selon l'une quelconque des revendications précédentes, dans lequel la génération de la partie DMRS comprend la génération de la séquence DMRS à partir d'une séquence racine de Zadoff-Chu choisie.

8. Procédé selon l'une quelconque des revendications précédentes, dans lequel l'équipement utilisateur est configuré pour transmettre automatiquement un nombre de répétitions PUSCH₊₊ d'occasions PUSCH₊₊ disponibles consécutives, sans attendre la réception d'une réponse d'accès aléatoire de la station de base ou la fin d'un temporisateur, à l'aide d'un mécanisme RRC.

9. Procédé selon la revendication 8, dans lequel, si les répétitions PUSCH₊₊ des occasions PUSCH₊₊ sont dans un même intervalle de temps, les répétitions incluent une même version du DMRS des occasions PUSCH₊₊ ou une séquence DMRS est divisée en parties DMRS élémentaires, différentes parties DMRS élémentaires étant incluses dans différentes répétitions des occasions PUSCH₊₊.

10. Procédé selon la revendication 8, dans lequel, si les répétitions PUSCH₊₊ des occasions PUSCH₊₊ sont dans des créneaux différents, les DMRS inclus dans les répétitions des occasions PUSCH₊₊ sont les mêmes.

11. Procédé selon la revendication 8, dans lequel les données PUSCH incluses dans les répétitions des occasions PUSCH₊₊ sont la même version de redondance ou des versions de redondance différentes.

12. Procédé selon la revendication 8, dans lequel les répétitions PUSCH₊₊ dans les occasions PUSCH₊₊ sont transmises à des fréquences différentes.

13. Procédé selon la revendication 8, dans lequel, en réponse à la réception d'une réponse d'accès aléatoire provenant de la station de base et comprenant un indicateur de répétition, le procédé comprend l'arrêt des répétitions PUSCH₊₊ envoyées par l'équipement utilisateur (1).

14. Procédé selon la revendication 8, dans lequel une ou plusieurs répétitions PUSCH₊₊ contiennent uniquement des données PUSCH.

15. Procédé selon la revendication 8, dans lequel au moins une des répétitions PUSCH₊₊ contient des données PUSCH et une ou plusieurs répétitions PUSCH₊₊ contiennent uniquement des DMRS.

16. Procédé selon la revendication 15, dans lequel la première répétition contient uniquement des DMRS.

17. Équipement utilisateur (1) configuré pour exécuter une procédure RACH lui permettant d'accéder à un réseau (3) dans un système de communication (100), le réseau comprenant au moins une station de base (2), la procédure RACH comprenant l'envoi d'un message RACH par l'équipement utilisateur (1) à la station de base (2) sur un ou plusieurs canaux de liaison montante, ledit message comprenant une transmission PUSCH améliorée dite PUSCH₊₊, comprenant une partie DMRS et une partie données PUSCH, la partie DMRS étant envoyée à titre de préambule, chaque séquence de préambule DMRS étant mappée à une occasion PUSCH₊₊ spécifique dans les domaines fréquentiel et temporel, ledit équipement utilisateur (1) étant configuré pour transmettre conjointement la partie DMRS et la partie données PUSCH au moment de la transmission, ladite transmission utilisant une allocation contiguë de ressources dans le domaine temporel pour la partie DMRS et la partie données PUSCH sans intervalle de temps entre la partie DMRS et la partie données PUSCH, la transmission PUSCH améliorée ayant un format de courte longueur basé sur une longueur de séquence égale à 139 éléments de ressources
